(19) Europäisches Patentamt
European Patent Office
Office européen des brevets

(11) **EP 1 857 349 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(51) Int Cl.:
***B62D 6/04*** *(2006.01)*

(21) Anmeldenummer: **07106529.6**

(22) Anmeldetag: **19.04.2007**

(54) **Verfahren zur Verbesserung der Spurtreue eines Fahrzeugs und zugehöriges Lenksystem**

Method for improving the heading of a vehicle and associated steering system

Procédé pour améliorer le guidage d'un véhicule et système de direction correspondant

(84) Benannte Vertragsstaaten:
**DE FR GB**

(30) Priorität: **16.05.2006 DE 102006022663**

(43) Veröffentlichungstag der Anmeldung:
**21.11.2007 Patentblatt 2007/47**

(73) Patentinhaber: **Ford Global Technologies, LLC**
**Dearborn, MI 48126 (US)**

(72) Erfinder:
• **Burgio, Gilberto**
**52080, Aachen (DE)**

• **Maurice, Jan Pieter**
**6461 NA, Kerkrade (NL)**
• **Damman, Anja**
**52080, Aachen (DE)**

(74) Vertreter: **Drömer, Hans-Carsten**
**Ford-Werke Aktiengesellschaft**
**Patentabteilung NH/DRP**
**Henry-Ford-Strasse 1**
**50725 Köln (DE)**

(56) Entgegenhaltungen:
**WO-A-2004/022415    DE-A1- 10 119 967**
**DE-A1- 19 824 914    FR-A1- 2 843 085**
**US-A1- 2003 055 543**

EP 1 857 349 B1

**Beschreibung**

Die vorliegende Erfindung betrifft ein Verfahren zur Verbesserung eines Geradeauslaufs bzw. der Spurtreue eines Fahrzeugs, sowie ein zugehöriges Lenksystem für Fahrzeuge. Es ist insbesondere ein Verfahren zur Korrektur von Zugwirkungen und zur Kompensation des Abdrifts eines Fahrzeugs während der Geradeausfahrt betroffen. Es ist allgemeines Ziel eines solchen Systems bzw. Verfahrens bei der Geradeausfahrt des Fahrzeugs am Steuersystem anliegende Drehmomente zu kompensieren, um das Abdriften des Fahrzeugs zu vermeiden.

Bei diesen Drehmomenten handelt es sich einerseits, um meist nicht zu vermeidende, dem Fahrzeug immanente Auswirkungen einer fehlerhaften beziehungsweise fehlerhaft gewordenen Fahrzeugabstimmung, zum Beispiel unterschiedlicher Reifendruck, Verstellung der Lenkgeometrie usw.. Da diese Einwirkungen im Vergleich von langer Dauer sind, spricht man auch von einer Langzeitkorrektur. Andererseits können fahrsituationsabhängige Bedingungen, wie Seitenwind, Straßenwölbung usw., sich derart auf die Fahrdynamik auswirken, dass es zu einem Abdrift kommt, welches das Aufbringen eines zusätzlichen Drehmoments zur Kompensation des Abdrifts oder der Korrektur des ungewünschten Lenkverhaltens durch den Fahrer am Lenkrad erforderlich macht. Da diese Störungen im Vergleich von kurzer Dauer sind, spricht man auch von einer Kurzzeitkorrektur.

So betrifft die WO2004022415 A1 eine Vorrichtung zur Lenkunterstützung für Fahrzeuge mit elektromechanischer Lenkung, wobei parallel sowohl eine Kurzzeitkorrektur (fahrsituationsabhängig) als auch eine Langzeitkorrektur bei Detektion eines Geradeauslaufs vorgenommen wird. Die Langzeitkompensation erfolgt über einen Integrator. Der ermittelte Wert wird in einem EEPROM abgelegt.

DE10161619 A1 betrifft im Wesentlichen die Detektion einer Fehlausrichtung des Lenksystems, der in einem Zustand eines Geradeauslaufs ermittelt wird. Das ermittelte Drehmoment wird akkumuliert und in einem Speicher hinterlegt. Eine Verwendung der ermittelten Information für ein unabhängig betätigtes, elektrisches Lenksystem zur Kompensation wird lediglich am Rande erwähnt.

US20030055543 A1 betrifft ein System zur Kompensation von Fahrzeug-immanenter Spuruntreue. Es wird eine Langzeitkompensation vorgenommen wobei ein Zustand eines Geradeauslaufs detektiert wird, und wobei ein mit der Spurtreue verbundenes Drehmoment ermittelt wird und in das Lenksystem zur Kompensation ein daraus berechnetes Kompensationsdrehmoment eingespeist wird. Diese Berechnung erfolgt hier durch eine so genannte "summing function", also Addition eines vorhandenen Wertes mit einem zeitlich verzögerten gemessenen Wert.

DE4232256 A1 und DE19527334 A1 betreffen ein Lenksystem zur Unterdrückung von fahrsituationsbedingten Störungen auf das Fahrverhalten. Demzufolge erfolgt eine Kompensation lediglich aufgrund der Messung von Giergeschwindigkeit und Querbeschleunigung. Eine Erfassung einer Geradeausfahrt zur Langzeitkompensation ist nicht beschrieben. Ebenso betrifft die DE19745733 A1 eine Lenkvorrichtung mit einer Vorrichtung zur Verschiebung wenigstens einer Spurstange, um fahrsituationsbedingte Einwirkungen auf das Lenksystem zu kompensieren. Ziel der Vorrichtung ist nicht die Langzeitkompensation Fahrzeug-immanenter Spurverstellungen. So wird keine Geradeausfahrt detektiert.

Die EP0822130 B1 betrifft ein hydraulisches System zur Langzeitkompensation einer Fehlausrichtung eines Lenksystems mit Umströmungsleitungen und Ventilen, welches eine Fehlausrichtung zu kompensieren vermag. Das System eignet sich zur Nachrüstung und kann automatisiert werden. Es werden eine automatische Justierung und zu diesem Zweck ferner Sensoren vorgeschlagen, damit eine Justierung bei Geradeausfahrt erfolgen kann. Es wird nicht beschrieben, wie der Zustand des Vorliegens einer Geradeausfahrt ermittelt wird.

Die EP1006338 A2 betrifft ein per Stellmotoren betriebenes, so genanntes "Steer-by-wire"-Lenksystem. Hierbei wird kein Kompensationsdrehmoment ermittelt, sondern die Fehlausrichtung eines Rades wird mittels separater Messvorrichtung als eine Wartungsmaßnahme ermittelt und kompensiert. Dabei handelt es sich lediglich um eine Wartungsmaßnahme, bei der die Ausrichtung des Rades korrigiert wird und nicht um eine bei einer Geradeausfahrt vorgenommene Ermittlung des Kompensationsdrehmoments. Es wird folglich auch keine Geradeausfahrt detektiert.

FR 2801270 A1 betrifft im Wesentlichen ein System zur Kompensation fahrsituationsbedingter Einwirkungen auf das Lenksystem. Es erfolgt wiederum keine Detektion einer Geradeausfahrt, um daraus ein Kompensationsdrehmoment zu erhalten.

US5481457 A und US5528497 zeigen ebenfalls jeweils ein System zur Kompensation lediglich fahrsituationsbedingter Einwirkungen auf das Lenksystem. Die Kompensation erfolgt aufgrund der Messung der Giergeschwindigkeit oder einer seitlichen Beschleunigung, wobei die Kompensation geschwindigkeitsabhängig erfolgt. Auch hier erfolgt keine Detektion einer Geradeausfahrt, um dabei ein Kompensationsdrehmoment zu erhalten.

Die US6250421 B1 offenbart ein System zur Kompensation eines ungleichmäßigen Lenkverhaltens, das von ungleichmäßigem Reifendruck herrührt. Folglich ist eine Vorrichtung zur Messung des Reifendrucks zwingend vorgesehen. Die Detektion einer Geradeausfahrt ist nicht vorgesehen. Der Fahrer wird gegebenenfalls alarmiert.

Die FR 2 843 085 offenbart ein Verfahren zur Herbeiführung eines aktiven Zugausgleichs für das Ziehen eines Fahrzeugs, das durch die Schrägheit der
Fahrbahn, auf der das Fahrzeug fährt, oder durch Seitenwind bedingt ist, wobei ein Ausgleichsmoment durch eine elektrische Hilfskraftlenkung auf die Räder angewendet wird. Das Verfahren umfasst:

einen ersten Identifikationsblock, der ausgangsseitig eine positive oder negative Information für den Geradeauslauf zurückschickt,

einen ersten Rechenblock zum Berechnen eines Ausgleichsmoments, wobei die Berechnung gestartet wird, wenn der erste Identifikationsblock eine positive Information zurückschickt,

und einen zweiten Rechenblock der das zuvor berechnete Ausgleichsmoment nach für den Zustand des Fahrzeugs repräsentativen Werten gewichtet.

Vor dem zuvor beschriebenen Stand der Technik ist es Aufgabe der vorliegenden Erfindung, ein verbessertes Verfahren zur Verbesserung eines Geradeauslaufs, ein zugehöriges Lenksystem für Fahrzeuge sowie ein entsprechendes Fahrzeug bereitzustellen, indem die Fahrdynamik und gegebenenfalls das subjektive Fahrempfinden der das Fahrzeug steuernden Person verbessert werden.

Diese Aufgabe wird durch ein Verfahren mit den Merkmalen des Anspruchs 1 sowie durch ein Lenksystem mit den Merkmalen des Anspruchs 10 gelöst.

Vorteilhafte Ausgestaltungen ergeben sich aus den Unteransprüchen.

Das erfindungsgemäße Verfahren zur Verbesserung eines Geradeauslaufs, bzw. der Spurtreue betrifft Fahrzeuge mit einem Lenksystem, die eine aktive Lenkunterstützung, beispielsweise eine elektromechanische oder hydraulische Lenkunterstützung aufweisen. Bevorzugt ist das Verfahren derart ausgelegt, dass es mit einer elektromechanischen Lenkunterstützung zu kombinieren ist, da diese aufgrund des vergleichsweise preiswerten Aufbaus weit verbreitet sind und besonders genau ansteuerbar sind. Bei dem erfindungsgemäßen Verfahren werden Daten zur Fahrdynamik erfasst. Bevorzugt handelt es sich dabei um Daten, die Bewegungs- bzw. Belastungszustände des Fahrzeugs repräsentieren. Noch Bevorzugter sind sie aus der Gruppe, bestehend aus Giergeschwindigkeit, Querbeschleunigung, Lenkwinkel, Umdrehungsgeschwindigkeit der Räder, Fahrzeuggeschwindigkeit, Torsionsstabdrehmoment, Lenkradstellwinkel, Zahnstangenverschiebung und Zahnstangengeschwindigkeit, einzeln oder in Kombination ausgewählt.

Meist bevorzugt werden Giergeschwindigkeit, Querbeschleunigung und Lenkradstellwinkel als Daten für die Erfassung der Fahrzeugdynamik und zur nachfolgenden Identifikation eines Geradeauslaufs verwendet. Es hat sich überraschend gezeigt, dass mittels dieser Daten das erfindungsgemäße Verfahren besonders einfach und preiswert durchzuführen ist.

Gemäß einer bevorzugten Ausführungsform werden die erfassten Daten einer Tiefpassfilterung unterzogen, um hochfrequente Störungen zu eliminieren.

Die Daten werden möglichst momentan erfasst, damit das erfindungsgemäße Verfahren möglichst zeitlich unverzögert, ungewollte Änderungen der Fahrdynamik zu erfassen vermag.

Es obliegt dem Fachmann, die Abtastrate der Datenerfassung entsprechend der anvisierten Drehmomentkompensation anzupassen. Gemäß einer besonderen Ausgestaltung erfolgt die Erfassung mit einer vergleichsweise hohen Abtastrate, von beispielsweise 10 ms bis 100 ms, um beispielsweise während eines Geradeauslaufs mehrere Kompensationsdrehmomente in Abfolge zu ermitteln, um eine nachfolgend beschriebene Kurzzeitkompensation zu erreichen.

Der Fachmann kann die passende Abtastrate einstellen oder beispielsweise erfolgt die Einstellung in Abhängigkeit der Geschwindigkeit des Fahrzeugs. Gemäß einer weiteren Ausgestaltung werden die Daten mittels bekannter oft im Fahrzeug vorhandener Einrichtungen ermittelt. Beispielweise werden Giergeschwindigkeit und Querbeschleunigung mittels eines im Fahrzeug vorhandenen Systems mit elektronischen Stabilitätsprogramm ESP bestimmt und ausgegeben, um durch das erfindungsgemäße Verfahren verwendet zu werden.

Beim erfindungsgemäßen Verfahren wird aus den erfassten Daten der Zustand eines Geradeauslaufs des Fahrzeugs identifiziert. Der Zustand wird anhand der erfassten Daten identifiziert, nämlich dass wenigstens ein Wert der erfassten Daten oder ein aus den Daten abgeleiteter Wert unter oder über einen vorgegebenen Schwellenwert für einen vorgegebenen Zeitraum oder eine vorgegebene Strecke fällt. Der Zeitraum oder die Strecke kann beispielsweise in Abhängigkeit der Geschwindigkeit vorgegeben sein.

Im Zustand des Geradeauslaufs wird das am Lenksystem anliegende bzw. aufzubringende Drehmoment gemessen, das vom Fahrer angelegt wird, um den Geradeauslauf des Fahrzeugs beizubehalten. Beispielsweise wird das Drehmoment bei einer Lenkung am Torsionsstab oder am zugehörigen Steuerritzel gemessen.

Aus dem gemessenen Drehmoment wird ein Kompensationsdrehmoment berechnet. Die aktive Lenkunterstützung wird mit dem Kompensationsdrehmoment zur Gegenkompensation des am Lenksystem anliegenden, gemessenen Drehmoments angesteuert, um den Fahrer bei der Einhaltung des Geradeauslaufs zu unterstützen. Damit wird erreicht, dass sich die Fahrdynamik und gegebenenfalls das subjektive Fahrempfinden der das Fahrzeug steuernden Person verbessern. Dieses positive Fahrempfinden beruht im Wesentlichen darauf, dass zur Aufrechterhaltung des Geradeauslaufs des Fahrzeugs vom Fahrer keine Lenkkräfte aufgebracht werden müssen Zudem wird damit die Fahrsicherheit erhöht, da sich das Fahrzeug entsprechend der visuell wahrgenommen Erwartung des Fahrers verhält.

Gemäß einer weiteren Ausführungsform ist vorgesehen, dass eine Ansteuerung der aktiven Lenkunterstützung erst dann erfolgt, wenn das berechnete Kompensationsdrehmoment über einem vorgegebenen Schwellenwert liegt und/oder die Ansteuerung der aktiven Lenkunterstützung auf einen Grenzwert beschränkt ist. Der Grenzwert, d. h. der Maximalwert des berechneten Kompensationsdrehmoments ist in einer Ausgestaltung vorgesehen, um eine übermäßige Kompensation und damit eine zu starke Störung der Lenkgeometrie zu verhindern. Eine zu starke Kompensation kann zum Beispiel zu einer zu großen Unsymmetrie im Lenkverhalten führen, dass das Lenkverhalten in Kurven beeinträchtigt ist. Gemäß einer weiteren vorteilhaften Ausführungsform vorgesehen sein, dass im Fall, dass das berechnete Kompensationsdrehmoment den Grenzwert erreicht oder überschreitet, ein Fehler und/oder eine akustische und/oder visuelle Warnmeldung ausgegeben werden, um den Fahrer oder bei einer Wartung des Fahrzeugs Servicepersonal zu warnen.

Beim erfindungsgemäßen Verfahrens ist vorgesehen, dass im Schritt zur Berechnung des Kompensationsdrehmoments Reibungskräfte und/oder Rückstellkräfte berücksichtigt werden. Dadurch kann in besonderem Maße einerseits die Fahrdynamik und das subjektive Fahrempfinden der das Fahrzeug steuernden Person verbessert werden. Andererseits wird dadurch erreicht, dass das Verfahren erheblich beschleunigt und/oder genauer. Das tatsächlich aufzubringende Kompensationsdrehmoment, d. h. das Kompensationsdrehmoment das den Geradeauslauf des Fahrzeugs ohne Eingriff durch den Fahrer herstellt, wird somit mit höherer Genauigkeit erreicht. Ferner wird bei Ermittlung des Kompensationsdrehmoments in mehreren Schritten, beispielsweise bei der nachfolgend beschriebenen Mittelwertbildung, das Verfahren erheblich beschleunigt. Es werden so weniger Schritte benötigt, das tatsächlich aufzubringende, d.h. angestrebte Kompensationsdrehmoment zu erhalten. Nachfolgend wird eine Ausführungsform beschrieben, bei der das von der aktiven Lenkunterstützung aufgebrachte Unterstützungsdrehmoment und Reibungs- und Rückstelldrehmomente berücksichtigt werden.

Die aufzubringende Kompensationskraft $F_\delta$ an der Zahnstange wird in dieser Ausführungsform gemäß der folgenden Formel bestimmt:

$$F_\delta = F_{rd} + F_a + F_{rst} - F_{fr}$$

in zugehörige Drehmomente umgerechnet entspricht dies:

$$T_\delta = T_{rd} + T_a + T_{rst} - T_{fr} \qquad (1)$$

Demnach bestimmt sich das Kompensationsdrehmoment $T_\delta$ wie folgt: es wird die an der Lenkmechanik, beispielsweise der Zahnstange der Lenkung, anliegende Kraft $F_{rd}$ oder alternativ das am Torsionsstab anliegende Drehmoment gemessen und daraus das an der der Lenkmechanik anliegende Drehmoment $T_{rd}$ geschätzt. Wie nachfolgend erläutert werden wird, kann alternativ das entsprechende Drehmoment durch die aktive Lenkunterstützung gemessen und ausgegeben werden; in diesem Fall wird nachfolgend die Bezeichnung $T_{tb}$ gewählt und der Ausdruck ist in Formel (1) entsprechend zu ersetzen. Es wird ferner das von der aktiven Lenkunterstützung aufgebrachte Unterstützungsdrehmoment $T_a$ zur Aufrechterhaltung des Geradeauslaufs ermittelt. In einer Ausgestaltung wird das von der aktiven Lenkunterstützung aufgebrachte Unterstützungsdrehmoment $T_a$ anhand des an einem Motor der elektrisch betriebenen, aktiven Lenkunterstützung anliegenden Stroms ermittelt. In einer weiteren Ausgestaltung wird das in die aktive Lenkunterstützung eingespeiste Drehmoment $T_a$ ohne zusätzliche Messung von Drehmomenten auf Grundlage der Verstärkungskurve der aktiven Lenkunterstützung unter Verwendung des zuvor gemessenen oder geschätzten, an der Lenkmechanik, beispielsweise der Zahnstange der Lenkung, anliegenden Drehmoments $T_{rd}$ und der Momentangeschwindigkeit des Fahrzeugs geschätzt und zu dem zuvor genannten $T_{rd}$ addiert. Ferner werden auf der Reibung beruhende Drehmomente $T_{fr}$ subtrahiert und ein auf Rückstellkräften der Räder beruhendes Drehmoment $T_{rst}$ addiert. Das so erhaltene Kompensationsdrehmoment $T_\delta$ wird in zeitlicher Nachfolge der Berechnung in die aktive Lenkunterstützung eingespeist, um den Geradeauslauf des Fahrzeugs ohne Einwirkung des Fahrers zu erzwingen.

Die Werte der Reibungskräfte und/oder Rückstellkräftewerte werden beispielsweise in einem Fahrzustand des Fahrzeugs gemessen oder aus gemessenen Werten abgeschätzt oder die Werte der Reibungskräfte und/oder Rückstellkräftewerte können fest vorgegeben sein. Die Rückstellkräfte beruhen beispielsweise auf der mechanischen Auslegung der Radaufhängung und auf Abrolleigenschaften der Reifen.

Die Reibungskraft bzw. das Reibungsdrehmoment wird in einer Ausgestaltung gemäß dem Stribeck-Reibungsmodell angenähert.

Bei einer weiteren Ausführungsform des erfindungsgemäßen Verfahrens wird das berechnete Kompensationsdrehmoment gespeichert. Beispielsweise kann das gespeicherte Kompensationsdrehmoment von einem aktuelleren Wert im Speicher überschrieben werden.

Beispielsweise ist ferner vorgesehen, das berechnete Kompensationsdrehmoment zurückzusetzen. Ist der schlechte Geradeauslauf auf einen fahrzeugimmanenten Fehler, beispielsweise eine Fehljustierung des Lenksystems, zurückzuführen, ist es beispielsweise von Vorteil nach Beseitigung dieser fahrzeugseitigen Störung den gespeicherten Wert des Kompensationsdrehmoments zurückzusetzen, wobei er auf Null oder auf einen sonstigen vorgegebenen Wert eingestellt wird.

Bei einer weiteren vorteilhaften Ausführungsform werden mehrere Kompensationsdrehmoments über mehrere Geradeauslaufzustände oder zu mehreren Zeitpunkten während eines Geradeauslaufs gemittelt, um ein mittleres Langzeitkompensationsdrehmoment zu erhalten. Für die Mittelwertbildung können unterschiedliche statistische Verfahren verwendet werden. Durch die Mittelwertbildung wird verhindert, dass temporäre kurzfristige Einwirkungen, die Berechnung des Kompensationsdrehmoments zu stark beeinflussen. Bevorzugt handelt es sich um eine gleitende Mittelwertbildung. Eine Mittelwertbildung gemäß der folgenden Formel hat sich als besonders vorteilhaft erwiesen:

$$\overline{\chi}_k = \frac{(k-1)\cdot \overline{\chi}_{k-1} + \chi_k}{k} \qquad (2)$$

wobei $\chi_k$ der momentane Wert ($T_\delta$ + alter Kompensationswert), $\overline{X}_{k-1}$ de vorhergehende Mittelwert, k der laufende Index k-1 der vorhergehende Index und $\overline{X}_k$ der ermittelte neue Mittelwert ist.

Bei einer weiteren Ausführungsform wird zusätzlich zum mittleren Langzeitkompensationsdrehmoment über mehrere Geradeauslaufzustände jeweils nur ein Kompensationsdrehmoment während eines Geradeauslaufzustand berechnet, der für eine momentane Kompensation, als ein so genanntes Kurzzeitkompensationsdrehmoment, verwendet wird. Dieses wird dazu verwendet, eine kurzfristige, insbesondere nicht fahrzeugimmanente, Störung des Geradeauslaufs durch Ansteuerung der aktiven Lenkunterstützung mit dem Kurzzeitkompensationsdrehmoment zusätzlich zu kompensieren. Beispielsweise handelt es sich dabei um eine kurzfristige äußere Einwirkung auf das Fahrzeug, wie Seitenwind, Wölbung oder Neigung der Fahrbahnoberfläche.

Bei einer weiteren vorteilhaften Ausgestaltung wird die Kurzzeitkompensationsdrehmoment unabhängig von dem Langzeitkompensationsdrehmoment, beispielsweise in Zwischenschritten, berechnet, damit die Langzeitkompensation unabhängig von der Kurzzeitkompensation erfolgt.

Bei einer weiteren vorteilhaften Ausführungsform wird in einem zusätzlichen Zwischenschritt in Schritt (d) ermittelt, wie und/oder ob das ermittelte Kurzzeitkompensationsdrehmoment in die Berechnung des mittleren Langzeitkompensationsdrehmoments eingeht. Beispielsweise wird anhand eines vorgegebenen Grenzwertes für das gemessene Drehmoment oder eines Grenzwerts für die Abweichung zwischen dem vorliegenden Mittelwert der Langzeitkompensation und der Kurzzeitkompensation entschieden, ob der gerade bestimmte Wert in die Langzeitkompensation einfließt oder nicht.

Bei einer weiteren Ausführungsform wird anhand dieser Abweichung entschieden, welcher Anteil des ermittelten Wertes in die Bestimmung des Mittelwertes, d.h. in die Langzeitkompensation einfließt und welcher Anteil für eine zusätzliche Kurzzeitkompensation verwendet wird. Durch diese Maßnahmen wird sichergestellt, dass kurzfristige, nichtfahrzeugimmanente Störungen der Spurtreue in die Bestimmung des Langzeitkompensationsdrehmoments nicht eingehen.

Bei einer weiteren vorteilhaften Ausführungsform wird zeitabhängig bei der Ansteuerung der aktiven Lenkunterstützung das in die Lenkunterstützung eingespeiste Drehmoment auf das berechnete Kompensationsdrehmoment gesteigert. Dadurch wird erreicht, dass dem Fahrer eine Gewöhnungsphase an das durch die Kompensation bewirkte Fahrempfinden bereitgestellt wird. Der Fahrer wird geringer durch das veränderte Lenkverhalten überrascht. Die Dauer der Anpassung, d.h. Steigerung, des Drehmoments auf das berechnete Kompensationsdrehmoments kann geschwindigkeitsabhängig oder in Abhängigkeit des Betragsunterschieds zwischen dem vorhergehenden Kompensationsdrehmoment und dem neu berechneten Kompensationsdrehmoment erfolgen. In einer Ausführungsform erfolgt die Anpassung während der Mittelwertbildung, indem das ermittelte Kompensationsdrehmoment mit einem Faktor kleiner als 1 multipliziert wird, so dass das Kompensationsdrehmoment im Laufe der Mittelwertbildung allmählich gesteigert wird.

Die Erfindung betrifft ferner ein Lenksystem zur Durchführung des Verfahrens zur Verbesserung eines Geradeauslaufs eines Fahrzeugs gemäß einer der zuvor beschriebenen Ausführungsformen. Das Lenksystem umfasst: eine aktive Lenkunterstützung, Mittel zu Erfassung von Daten zur Fahrdynamik; Mittel zur Identifikation eines Zustands eines Geradeauslaufs aus den erfassten Daten; Mittel zur Messung eines an dem Lenksystem anliegenden Drehmoments wenigstens im Geradeauslaufzustand; Mittel zur Berechnung eines erforderlichen Kompensationsdrehmoments bei einem Kräftegleichgewicht im Geradeauslaufzustand aus dem gemessenen Drehmoment; Mittel zur Ansteuerung der aktiven Lenkunterstützung mit dem Kompensationsdrehmoments zur Gegenkompensation des am Lenksystem anliegenden, gemessenen Drehmoments, sowie Mittel zur Abschätzung und/oder Erfassung von Daten zu Reibungskräften und/oder Rückstellkräften des Lenksystems, die bei der Berechnung des Kompensationsdrehmoments berücksichtigt werden.

Weitere vorteilhafte Ausgestaltungen der Erfindung sind in den Unteransprüchen und der Folgenden Figurenbeschreibung offenbart.

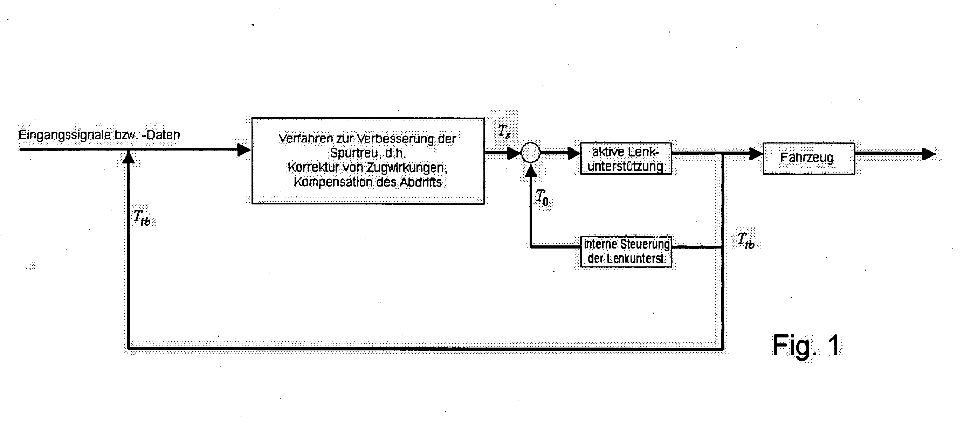

Fig. 1 stellt schematisch den Ablauf des erfindungsgemäßen Verfahrens in einer besonderen Ausführungsform dar. Neben weiteren Eingangssignalen bzw. Eingangsdaten verwendet das Verfahren zur Verbesserung der Spurtreue durch Bestimmung des Kompensationsdrehmoment $T_\delta$ ein von der aktiven Lenkunterstützung gemessenes und bereitgestelltes Drehmoment $T_{tb}$. Dieses entspricht prinzipiell dem in der Formel (1) angegebenen $T_{rd}$, wobei der unterschiedliche Index darauf hinweist, dass das Drehmoment, nicht wie durch die Bezeichnung $T_{rd}$ ausgedrückt, an der Lenkung unmittelbar gemessen wird sondern der Wert von der vorhandenen aktiven Lenkunterstützung gemessen und bereitgestellt wird, was durch die Bezeichnung $T_{tb}$ ausgedrückt werden soll. Dieses Drehmoment $T_{rd}$ dient einerseits neben anderen als Eingangssignal für das Verfahren zur Verbesserung der Spurtreue, welches ein erforderliches Kompensationsdrehmoment $T_\delta$ ausgibt. Daneben wird das Drehmoment $T_{tb}$ dazu verwendet, über die interne Steuerung der Lenkunterstützung einen Drehmomentwert $T_0$ für die zugrunde liegende Lenkunterstützung auszugeben. Dieser Wert $T_0$ wird dem Kompensationsdrehmoment $T_\delta$ überlagert und in die aktive Lenkunterstützung eingespeist, um einen Geradeauslauf des Fahrzeugs ohne Einwirkung des Fahrers auf die Lenkung zu erreichen.

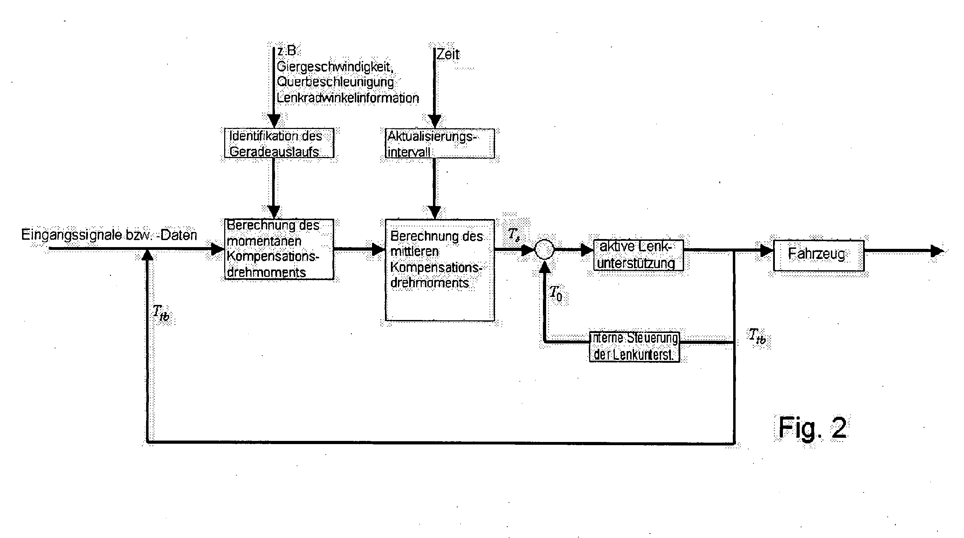

Fig. 2 stellt schematisch den Ablauf des erfindungsgemäßen Verfahrens in einer weiteren besonderen Ausführungsform dar, wobei das dargestellte Verfahren im Prinzip dem entspricht, wie es in Figur 1 dargestellt ist. Hier wird zusätzlich das aus den Eingangssignalen bzw. Eingangsdaten und aus dem vom aktiven Lenksystem gemessenen und bereitgestellten Drehmoment $T_{tb}$ berechnete Kompensationsdrehmoment über mehrere Geradeauslaufzustände oder zu mehreren Zeitpunkten während eines Geradeauslaufs gemittelt. Ferner ist zusätzlich gezeigt, wie die Giergeschwindigkeit, Querbeschleunigung und die Lenkradwinkelinformation dazu verwendet werden können, einen Geradeauslauf des Fahrzeugs zu identifizieren, um in Fall eines Geradeauslaufzustandes das momentane Kompensationsdrehmoment zu berechnen. Nach einem vorgegebenen Aktualisierungsintervall werden weitere Kompensationsdrehmomente bestimmt, die zur Berechnung eines Mittelwertes verwendet werden. Dieser Mittelwert dient als gemitteltes Kompensationsdrehmoment für die Langzeitkompensation. Wie in Figur 1 wird das Drehmoment $T_{tb}$ dazu verwendet, über die interne Steuerung der Lenkunterstützung einen Drehmomentwert $T_0$ für die zugrunde liegende Lenkunterstützung auszugeben. Dieser Wert $T_0$ wird dem gemittelten Kompensationsdrehmoment $T_\delta$ überlagert und in die aktive Lenkunterstützung eingespeist, um einen Geradeauslauf des Fahrzeugs ohne Einwirkung des Fahrers auf die Lenkung zu erreichen.

**Patentansprüche**

1. Verfahren zur Verbesserung eines Geradeauslaufs eines Fahrzeugs mit einem Lenksystem mit aktiver Lenkunterstützung welches folgende Schritte aufweist:

   (a) Erfassung von Daten zur Fahrdynamik;
   (b) Identifikation eines Zustands eines Geradeauslaufs aus den erfassten Daten, weil wenigstens ein Wert der erfassten Daten oder ein aus den Daten abgeleiteter Wert unter oder über einen vorgegebenen Schwellenwert für einen vorgegebenen Zeitraum oder eine vorgegebene Strecke fällt;
   (c) Messung eines an dem Lenksystem anliegenden Drehmoments wenigstens bei Geradeauslauf;
   (d) Berechnung eines erforderlichen Kompensationsdrehmoments aus dem in Schritt (c) gemessenen Drehmoment;
   (e) Ansteuerung der aktiven Lenkunterstützung mit dem Kompensationsdrehmoment zur Gegenkompensation des am Lenksystem anliegenden, gemessenen Drehmoments

   **dadurch gekennzeichnet, dass** in Schritt (d) Reibungskräfte und/oder Rückstellkräfte berücksichtigt werden, indem von dem im Geradeauslauf gemessenen Drehmomentbetrag der Reibungsdrehmomentbetrag subtrahiert und der Rückstelldrehmomentbetrag addiert werden.

2. Verfahren zur Verbesserung eines Geradeauslaufs eines Fahrzeugs gemäß dem vorhergehenden Anspruch, **dadurch gekennzeichnet, dass** Werte der Reibungskräfte und/oder Rückstellkräftewerte in einem Fahrzustand des Fahrzeugs gemessen werden oder geschätzt werden.

3. Verfahren zur Verbesserung eines Geradeauslaufs eines Fahrzeugs gemäß einem der vorhergehenden Ansprüche, **dadurch gekennzeichnet, dass** in Schritt (d) das von der aktiven Lenkunterstützung aufgebrachte Unterstützungsdrehmoment berücksichtigt wird.

4. Verfahren zur Verbesserung eines Geradeauslaufs eines Fahrzeugs gemäß einem der vorhergehenden Ansprüche, **dadurch gekennzeichnet, dass** in Schritt (d) das Kompensationsdrehmoment aus den gemessenen Drehmomenten über mehrere Geradeauslaufzustände oder zu mehreren Zeitpunkten während eines Geradeauslaufs berechnet und gemittelt wird, um ein mittleres Langzeitkompensationsdrehmoment zu erhalten.

5. Verfahren zur Verbesserung eines Geradeauslaufs eines Fahrzeugs gemäß dem vorhergehenden Anspruch, **dadurch gekennzeichnet, dass** in Schritt (d) zusätzlich zum mittleren Langzeitkompensationsdrehmoment jeweils ein Kompensationsdrehmoment über einen Geradeauslaufzustand berechnet wird, um ein Kurzzeitkompensationsdrehmoment zu erhalten.

6. Verfahren zur Verbesserung eines Geradeauslaufs eines Fahrzeugs gemäß dem vorhergehenden Anspruch, **dadurch gekennzeichnet, dass** in einem zusätzlichen Zwischenschritt in Schritt (d) ermittelt wird, wie und/oder ob das ermittelte Kurzzeitkompensationsdrehmoment in die Berechnung des mittleren Langzeitkompensationsdrehmoments eingeht.

7. Verfahren zur Verbesserung eines Geradeauslaufs eines Fahrzeugs gemäß einem der vorhergehenden Ansprüche, **dadurch gekennzeichnet, dass** in Schritt (a) die Daten aus der Gruppe, bestehend aus Giergeschwindigkeit, Querbeschleunigung, Lenkwinkel, Umdrehungsgeschwindigkeit der Räder, Fahrzeuggeschwindigkeit, Torsionsstabdrehmoment, Lenkradstellwinkel, Zahnstangenverschiebung und Zahnstangengeschwindigkeit, einzeln oder in Kombination ausgewählt sind.

8. Verfahren zur Verbesserung eines Geradeauslaufs eines Fahrzeugs gemäß einem der vorhergehenden Ansprüche, **dadurch gekennzeichnet, dass** in Schritt (b) die Identifikation des Geradeauslaufszustands **dadurch** ermittelt wird, dass die erfassten Daten unter einen vorgegebenen Schwellenwert für einen vorgegebenen Zeitraum oder eine vorgegebene Strecke fallen.

9. Verfahren zur Verbesserung eines Geradeauslaufs eines Fahrzeugs gemäß einem der vorhergehenden Ansprüche, **dadurch gekennzeichnet, dass** in Schritt (e) bei der Ansteuerung der aktiven Lenkunterstützung die Ansteuerung allmählich auf das jeweilig berechnete Kompensationsdrehmoment gesteigert wird.

10. Lenksystem zur Durchführung des Verfahrens zur Verbesserung eines Geradeauslaufs eines Fahrzeugs gemäß einer der vorhergehenden Verfahrensansprüche, umfassend: eine aktive Lenkunterstützung, Mittel zu Erfassung von Daten zur Fahrdynamik; Mittel zur Identifikation eines Zustands eines Geradeauslaufs aus den erfassten Daten; Mittel zur Messung eines an dem Lenksystem anliegenden Drehmoments; Mittel zur Berechnung eines erforderlichen Kompensationsdrehmoments wenigstens bei einem im Geradeauslauf vorliegenden Kräftegleichgewicht aus dem gemessenen Drehmoment; Mittel zur Ansteuerung der aktiven Lenkunterstützung mit dem Kompensationsdrehmoment zur Gegenkompensation des am Lenksystem anliegenden, gemessenen Drehmoments; **gekennzeichnet durch** Mittel zur Abschätzung und/oder Erfassung von Daten zu Reibungskräften und/oder Rückstellkräften des Lenksystems, die bei der Berechnung des Kompensationsdrehmoments berücksichtigt werden, indem von dem im Geradeauslauf gemessenen Drehmomentbetrag der Reibungsdrehmomentbetrag subtrahiert und der Rückstelldrehmomentbetrag addiert werden.

**Claims**

1. Method for improving straight line stability of a vehicle having a steering system with active steering assistance system which has the following steps:

   (a) acquisition of data relating to the vehicle movement dynamics;
   (b) identification of a state of straight line travel from the acquired data because at least one value of the acquired data or a value derived from the data drops below or exceeds a predefined threshold value for a predefined time period or a predefined distance,
   (c) measurement of a torque which is present at the steering system, at least during straight line travel;
   (d) calculation of a necessary compensation torque from the torque measured in step (c),
   (e) actuation of the active steering assistance system with the compensation torque in order to counter-compensate the measured torque present in the steering system **characterized in that** in step (d), frictional forces and/or restoring forces are taken into account by subtracting the frictional torque value from the torque value measured during straight line travel and adding the restoring torque value.

**2.** Method for improving straight line stability of a vehicle according to the preceding claim, **characterized in that** values of the frictional forces and/or restoring force values are measured or estimated in a driving state of the vehicle.

**3.** Method for improving straight line stability of a vehicle according to one of the preceding claims, **characterized in that** in step (d), the assistance torque which is applied by the active steering assistance system is taken in account.

**4.** Method for improving straight line stability of a vehicle according to one of the preceding claims, **characterized in that** in step (d), the compensation torque is calculated from the measured torques over a plurality of straight line travel states or at a plurality of times during straight line travel and averaged in order to obtain an average long-term compensation torque.

**5.** Method for improving straight line stability of a vehicle according to the preceding claim, **characterized in that** in step (d), in each case a compensation torque is calculated over a straight line travel state in addition to the average long-term compensation torque in order to obtain a short-term compensation torque.

**6.** Method for improving straight line stability of a vehicle according to the preceding claim, **characterized in that** in an additional intermediate step (d), it is determined how and/or whether the determined short-term compensation torque is included in the calculation of the average long-term compensation torque.

**7.** Method for improving straight line stability of a vehicle according to one of the preceding claims, **characterized in that** in step (a), the data from the group composed of yaw rate, lateral acceleration, steering angle, rotational speed of the wheels, velocity of the vehicle, torsion rod torque, steering wheel angle, toothed rack displacement and toothed rack speed are selected individually or in combination.

**8.** Method for improving straight line stability of a vehicle according to one of the preceding claims, **characterized in that** in step (b), the straight line travel state is identified by virtue of the fact that the acquired data drops below a predefined threshold value for a predefined time period or a predefined distance.

**9.** Method for improving straight line stability of a vehicle according to one of the preceding claims, **characterized in that**, when the active steering assistance system is actuated in step (e), the actuation is increased gradually to the respectively calculated compensation torque.

**10.** Steering system for carrying out the method for improving straight line stability of a vehicle according to one of the preceding method claims, comprising: an active steering assistance system system, means for acquiring data relating to the vehicle movement dynamics, means for identifying a state of straight line travel from the acquired data, means for measuring a torque which is present in the steering system, means for calculating a necessary compensation torque from the measured torque at least when there is an equilibrium of forces present during straight line travel, means for actuating the active steering assistance system with the compensation torque for counter-compensating the measured torque present in the steering system, **characterized by** means for estimating and/or acquiring data relating to frictional forces and/or restoring forces of the steering system, which data is taken into account in the calculation of the compensation torque, by subtracting the frictional torque value from the torque value measured during straight line travel and adding the restoring torque value.

**Revendications**

**1.** Procédé pour améliorer la stabilité directionnelle d'un véhicule comprenant un système de direction avec assistance active à la direction, qui présente les étapes suivantes :

(a) détection de données relatives à la dynamique de conduite ;
(b) identification d'un état d'une stabilité directionnelle à partir des données détectées, parce qu'au moins une valeur des données détectées ou une valeur dérivée des données se situe en dessous ou au-dessus d'une valeur seuil prédéterminée pendant un intervalle de temps prédéterminé ou sur une distance prédéterminée ;
(c) mesure d'un couple s'appliquant au système de direction au moins en cas de stabilité directionnelle ;
(d) calcul d'un couple de compensation nécessaire à partir du couple mesuré dans l'étape (c) ;
(e) commande de l'assistance active à la direction avec le couple de compensation pour effectuer une compensation opposée du couple mesuré s'appliquant au système de direction,

**caractérisé en ce que** dans l'étape (d), on tient compte des forces de frottement et/ou des forces de rappel en soustrayant de la valeur absolue du couple mesurée lors de la stabilité directionnelle la valeur absolue du couple de frottement et en ajoutant la valeur absolue du couple de rappel.

2. Procédé pour améliorer la stabilité directionnelle d'un véhicule selon la revendication précédente, **caractérisé en ce que** des valeurs de forces de frottement et/ou des valeurs de forces de rappel sont mesurées ou évaluées dans un état de conduite du véhicule.

3. Procédé pour améliorer la stabilité directionnelle d'un véhicule selon l'une quelconque des revendications précédentes, **caractérisé en ce que** dans l'étape (d), le couple d'assistance appliqué par l'assistance active à la direction est pris en compte.

4. Procédé pour améliorer la stabilité directionnelle d'un véhicule selon l'une quelconque des revendications précédentes, **caractérisé en ce que** dans l'étape (d), le couple de compensation est calculé à partir des couples mesurés sur plusieurs états de stabilité directionnelle ou à plusieurs instants pendant une stabilité directionnelle et est moyenné, afin d'obtenir un couple de compensation moyen sur une longue période.

5. Procédé pour améliorer la stabilité directionnelle d'un véhicule selon la revendication précédente, **caractérisé en ce que** dans l'étape (d), on calcule, en plus du couple de compensation moyen sur une longue période, à chaque fois un couple de compensation sur un état de stabilité directionnelle afin d'obtenir un couple de compensation sur une période courte.

6. Procédé pour améliorer la stabilité directionnelle d'un véhicule selon la revendication précédente, **caractérisé en ce que** dans une étape intermédiaire supplémentaire dans l'étape (d), on détermine comment et/ou si le couple de compensation détecté sur une période courte entre dans le calcul du couple de compensation moyen sur une longue période.

7. Procédé pour améliorer la stabilité directionnelle d'un véhicule selon l'une quelconque des revendications précédentes, **caractérisé en ce que** dans l'étape (a), les données sont sélectionnées individuellement ou en combinaison à partir du groupe comprenant la vitesse de lacet, l'accélération transversale, l'angle de direction, la vitesse de rotation des roues, la vitesse du véhicule, le couple de barre de torsion, l'angle de réglage du volant de direction, le décalage de la crémaillère et la vitesse de la crémaillère.

8. Procédé pour améliorer la stabilité directionnelle d'un véhicule selon l'une quelconque des revendications précédentes, **caractérisé en ce que** dans l'étape (b), l'identification de l'état de stabilité directionnelle est déterminée par le fait que les données détectées se situent sous une valeur seuil prédéterminée pendant un intervalle de temps prédéterminé ou sur une distance prédéterminée.

9. Procédé pour améliorer la stabilité directionnelle d'un véhicule selon l'une quelconque des revendications précédentes, **caractérisé en ce que** dans l'étape (e), lors de la commande de l'assistance active à la direction, la commande est augmentée progressivement jusqu'au couple de compensation calculé respectivement.

10. Système de direction pour mettre en oeuvre le procédé pour améliorer la stabilité directionnelle d'un véhicule selon l'une quelconque des revendications précédentes relatives au procédé, comprenant : une assistance active à la direction, des moyens pour détecter des données relatives à la dynamique de conduite ; des moyens pour identifier un état d'une stabilité directionnelle à partir des données détectées ; des moyens pour mesurer un couple s'appliquant au système de direction ; des moyens pour calculer un couple de compensation nécessaire au moins dans le cas d'un équilibre de forces existant lors de la stabilité directionnelle, à partir du couple mesuré ; des moyens pour commander l'assistance active à la direction avec le couple de compensation pour réaliser une compensation opposée du couple mesuré s'appliquant au système de direction, **caractérisé par** des moyens pour évaluer et/ou détecter des données relatives à des forces de frottement et/ou des forces de rappel du système de direction, qui sont prises en compte lors du calcul du couple de compensation, en soustrayant de la valeur absolue du couple mesurée lors de la stabilité directionnelle la valeur absolue du couple de frottement et en ajoutant la valeur absolue du couple de rappel.

Eingangssignale bzw. -Daten

Verfahren zur Verbesserung der Spurtreu, d.h. Korrektur von Zugwirkungen, Kompensation des Abdrifts

$T_s$

$T_0$

aktive Lenk-unterstützung

Fahrzeug

interne Steuerung der Lenkunterst.

$T_{fb}$

$T_{fb}$

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004022415 A1
- DE 10161619 A1
- US 20030055543 A1
- DE 4232256 A1
- DE 19527334 A1
- DE 19745733 A1
- EP 0822130 B1
- EP 1006338 A2
- FR 2801270 A1
- US 5481457 A
- US 5528497 A
- US 6250421 B1
- FR 2843085